# EUROPEAN PATENT APPLICATION

(11) **EP 4 557 155 A1**
(43) Date of publication of application: **21.05.2025**
(21) Application number: 24213600.0
(22) Date of filing: 18.11.2024
(51) Int. Cl.: G06F 30/373, G06F 111/06, G06F 111/08, G06F 119/12

(54) **ELECTRONIC DEVICE FOR OPTIMIZING SEMICONDUCTOR CHARACTERISTICS BASED ON PLACKETT-BURMAN DESIGN AND GENETIC ALGORITHM, AND OPERATING METHOD THEREOF**

(30) Priority: 20.11.2023 KR 20230161436; 08.03.2024 KR 20240033324
(71) Applicant: Samsung Electronics Co., Ltd., Suwon-si, Gyeonggi-do 16677 (KR)
(72) Inventor: KIM, Byeongnoh, Suwon-si, Gyeonggi-do 16677 (KR); CHAE, Suhyun, Suwon-si, Gyeonggi-do 16677 (KR); KIM, Dohan, Suwon-si, Gyeonggi-do 16677 (KR); SON, Younghoon, Suwon-si, Gyeonggi-do 16677 (KR); LEE, Jeeyong, Suwon-si, Gyeonggi-do 16677 (KR); CHOI, Insu, Suwon-si, Gyeonggi-do 16677 (KR)
(74) Representative: Kuhnen & Wacker Patent- und Rechtsanwaltsbüro PartG mbB

(57) **Abstract**

An electronic device (110) includes a Plackett-Burman design, PBD, execution circuit, a genetic algorithm, GA, execution circuit, and a control circuit. The PBD execution circuit is configured to generate an initial design of experiment, DOE, set including a plurality of initial cases regarding semiconductor characteristics of a memory device of an external device (120). The GA execution circuit is configured to convert a previous generation DOE set to a next generation DOE set. The control circuit is configured to transmit the initial DOE set to the external device (120), receive, from the external device (120), an initial characteristic evaluation, generate a starting DOE set based on the initial characteristic evaluation, and control a genetic algorithm to be performed with an experimental result of the starting DOE set as an input. Each of the plurality of initial cases corresponds to a combination of a plurality of setting values influencing the semiconductor characteristics.

## Description

### BACKGROUND

### 1. Field

The present disclosure relates generally to optimization of semiconductor characteristics, and more particularly, to an electronic device and an operating method thereof, which optimize semiconductor characteristics based on a Plackett-Burman design and genetic algorithm.

### 2. Description of Related Art

With the advent of high-speed systems and the diversification of applications such as, but not limited to, mobile device applications, server applications, autonomous driving, or the like, semiconductor characteristics-related issues may continue to arise, and thus, a need to secure signal integrity may be increasing.

In a development stage, operation stability of signals may be performed. However, it may be difficult to accomplish optimization at a relatively high level within a limited time period due to an increase in evaluation cases. Therefore, the importance of experimental planning for evaluation time and selection of a test case may be increasing, and as such, it may be necessary to efficiently secure semiconductor characteristic optimization conditions by introducing an evaluation condition optimization algorithm.

### SUMMARY

One or more example embodiments of the present disclosure provide an electronic device and an operating method thereof, which optimize semiconductor characteristics based on a Plackett-Burman design (PBD) and a genetic algorithm.

According to an aspect of the present disclosure, an electronic device includes a Plackett-Burman design (PBD) execution circuit, a genetic algorithm (GA) execution circuit, and a control circuit. The PBD execution circuit is configured to generate an initial design of experiment (DOE) set including a plurality of initial cases regarding semiconductor characteristics of a memory device included in an external device. The GA execution circuit is configured to convert a previous generation DOE set to a next generation DOE set based on a genetic algorithm. The control circuit is configured to transmit the initial DOE set to the external device, receive, from the external device, an initial characteristic evaluation performed based on the initial DOE set, generate a starting DOE set based on the initial characteristic evaluation, and control a genetic algorithm to be performed with an experimental result of the starting DOE set as an input. Each of the plurality of initial cases corresponds to a combination of a plurality of setting values influencing the semiconductor characteristics.

According to an aspect of the present disclosure, an operating method of an electronic device includes generating an initial DOE set including a plurality of initial cases regarding semiconductor characteristics of a memory device of an external device, transmitting, to the external device, the initial DOE set, receiving, from the external device, an initial characteristic evaluation performed based on the initial DOE set, generating a starting DOE set based on the initial characteristic evaluation, and generating an output DOE set by performing a genetic algorithm with an experimental result of the starting DOE set as an input. Each of the plurality of initial cases corresponds to a combination of a plurality of setting values influencing the semiconductor characteristics.

According to an aspect of the present disclosure, a system includes a first electronic device and a second electronic device. The first electronic device is configured to generate an initial DOE set including a plurality of initial cases regarding semiconductor characteristics of a memory device of a second electronic device, transmit, to the second electronic device, the initial DOE set, receive, from the second electronic device, an initial characteristic evaluation corresponding to the initial DOE set, generate a starting DOE set based on the initial characteristic evaluation, and perform a genetic algorithm with an experimental result of the starting DOE set as an input. The second electronic device is configured to receive, from the first electronic device, the initial DOE set including the plurality of initial cases, perform semiconductor characteristic evaluation by setting the memory device based on respective setting values of the plurality of initial cases, and transmit, to the first electronic device, the initial characteristic evaluation corresponding to a result of the performed semiconductor characteristic evaluation. Each of the plurality of initial cases corresponds to a combination of a plurality of setting values influencing the semiconductor characteristics. The first electronic device is further configured to perform linear analysis for each of the plurality of setting values based on the initial characteristic evaluation, determine the plurality of setting values based on a result of the linear analysis, generate an optimal case including the plurality of determined setting values, and generate the starting DOE set by merging the plurality of initial cases, the optimal case, and a base case in which the plurality of setting values are set to off.

Additional aspects may be set forth in part in the description which follows and, in part, may be apparent from the description, and/or may be learned by practice of the presented embodiments.

### BRIEF DESCRIPTION OF DRAWINGS

The above and other aspects, features, and advantages of certain embodiments of the present disclosure may be more apparent from the following description taken in conjunction with the accompanying drawings, in which:
FIG. 1 illustrates a system, according to an embodiment;
FIG. 2A is a block diagram of a first electronic device, according to an embodiment;
FIG. 2B is a block diagram of a second electronic device, according to an embodiment;
FIG. 3 is a flowchart illustrating a method of operating a first electronic device, according to an embodiment;
FIG. 4 is a table illustrating an example of an initial Plackett-Burman design (PBD) design of experiment (DOE) set, according to an embodiment;
FIG. 5 is a table illustrating an example of determining an optimal case, according to an embodiment;
FIG. 6 is a table illustrating an example of a starting PBD DOE set, according to an embodiment;
FIG. 7 illustrates an example of a genetic algorithm according to an embodiment;
FIG. 8 illustrates a signal exchange diagram, according to an embodiment;
FIG. 9 is a block diagram illustrating an electronic device, according to an embodiment;
FIG. 10 is a block diagram illustrating an electronic device, according to an embodiment;
FIG. 11A is a graph illustrating improvement of semiconductor characteristics according to generation repetition, according to an embodiment; and
FIG. 11B illustrates an improved eye diagram, according to an embodiment.

### DETAILED DESCRIPTION

The following description with reference to the accompanying drawings is provided to assist in a comprehensive understanding of embodiments of the present disclosure defined by the claims and their equivalents. Various specific details are included to assist in understanding, but these details are considered to be exemplary only. Therefore, those of ordinary skill in the art may recognize that various changes and modifications of the embodiments described herein may be made without departing from the scope of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

The terms "first," "second," third" may be used to describe various elements but the elements are not limited by the terms and a "first element" may be referred to as a "second element". Alternatively or additionally, the terms "first", "second", "third", and the like may be used to distinguish components from each other and do not limit the present disclosure. For example, the terms "first", "second", "third", and the like may not necessarily involve an order or a numerical meaning of any form.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, various embodiments of the present disclosure are described with reference to the accompanying drawings.

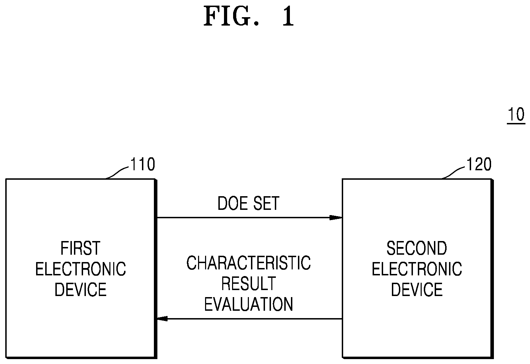

FIG. 1 illustrates a system 10, according to an embodiment.

Referring to FIG. 1, a system 10 may include a first electronic device 110 and a second electronic device 120.

The first electronic device 110, according to an embodiment, may optimize semiconductor characteristics of the second electronic device 120. The first electronic device 110 may be referred to using various terms such as, but not limited to, a test device, an optimization device, or the like. For example, the first electronic device 110 may provide a design of experiment (DOE) set to the second electronic device 120. The DOE set may be and/or may include data for evaluating semiconductor characteristics of a memory (e.g., at least one of a volatile memory or a nonvolatile memory) included in the second electronic device 120. For example, the DOE set may include a plurality of cases. Each of the plurality of cases may include a plurality of test mode register setting (TMRS) values for evaluating semiconductor characteristics of a memory included in the second electronic device 120. The TMRS value may include factors that may influence the semiconductor characteristics (e.g., input/output (I/O) margin in the case of a dynamic random-access memory (DRAM), eye size of an eye diagram, or the like) of the memory of the second electronic device 120 depending on whether the TMRS value is set to ON (e.g., POSITIVE, "+", high, "1", or the like) or the TMRS value is set to OFF (e.g., NEGATIVE, "-", low, "0", or the like).

The second electronic device 120, according to an embodiment, may evaluate semiconductor characteristics and provide a characteristic evaluation result to the first electronic device 110. The second electronic device 120 may receive, from the first electronic device 110, the DOE set and may provide, to the first electronic device 110, a characteristic evaluation result for each of the plurality of cases included in the DOE set. For example, the DOE set may include eight (8) cases, and each of the eight (8) cases may include a combination of seven (7) TMRS values. The second electronic device 120 may set a memory of the second electronic device 120 according to a TMRS value corresponding to each of eight (8) cases and evaluate semiconductor characteristics. For example, the second electronic device 120 may set a memory according to a combination of TMRS values of each of the eight (8) cases and evaluate an I/O margin and/or an eye size of an eye diagram. For example, when the DOE set includes eight (8) cases, the second electronic device 120 may perform evaluation of semiconductor characteristics eight (8) times and provide the first electronic device 110 with the eight (8) results of the characteristic evaluations.

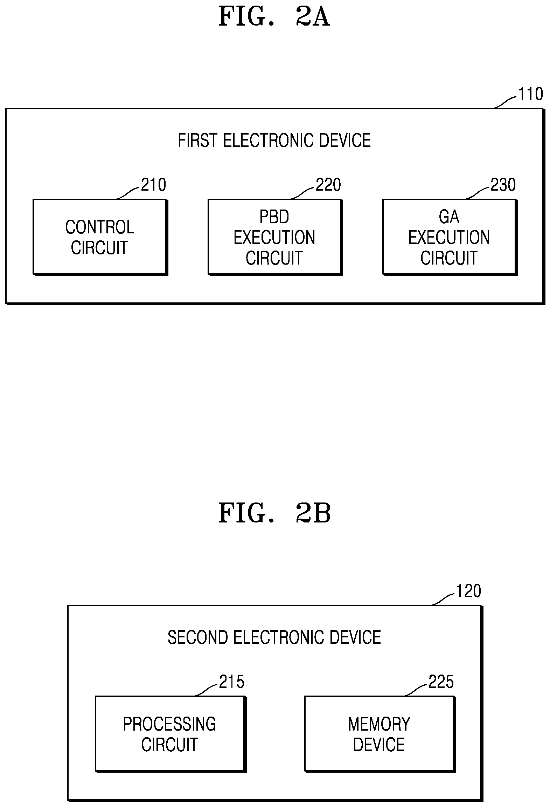

The first electronic device 110, according to an embodiment, may perform a genetic algorithm and/or identify an optimal case based on the characteristic evaluation result received from the second electronic device 120. For example, when the characteristic evaluation result satisfies the termination condition (e.g., the I/O margin exceeds the threshold margin and/or the child size exceeds the threshold size) of the genetic algorithm, generation repetition based on the genetic algorithm may be stopped, and, one case with a preferred (e.g., highest) evaluation result from among the DOE sets provided to the second electronic device 120 may be identified as an optimal case and provided to the second electronic device 120. The second electronic device 120 may provide optimal performance by receiving the optimal case and setting a memory device according to a combination of TMRS values included in the optimal case. As another example, when the characteristic evaluation result does not satisfy the termination condition of the genetic algorithm, the first electronic device 110 may generate and provide, to the second electronic device 120, a new DOE set (e.g., a child generation) by performing generation repetition of the DOE set (e.g., a parent generation). The first electronic device 110 and the second electronic device 120 are further described with reference to FIGS. 2A and 2B.

FIG. 2A is a block diagram of a first electronic device 110, according to an embodiment.

Referring to FIG. 2A, the first electronic device 110 may include a control circuit 210, a Plackett-Burman Design (PBD) execution circuit 220, and a genetic algorithm (GA) execution circuit 230.

The control circuit 210 may control the overall operation of the first electronic device 110. For example, the control circuit 210 may generate an initial PBD DOE set by providing a control signal to the PBD execution circuit 220. The initial PBD DOE set may be a DOE set for identifying initial characteristics of a memory included in the second electronic device 120. As another example, the control circuit 210 may perform generation repetition of the DOE set by providing a control signal to the GA execution circuit 230.

According to an embodiment, the control circuit 210 may determine whether to continue to perform generation repetition of the DOE set based on the characteristic evaluation result received from the second electronic device 120. For example, the control circuit 210 may determine whether the characteristic evaluation result received from the second electronic device 120 exceeds the threshold value and satisfies the termination condition of the genetic algorithm. When the termination condition of the genetic algorithm is satisfied, the control circuit 210 may provide a control signal to the GA execution circuit 230 to stop generation repetition based on the genetic algorithm, and may determine, as an optimal case, a case having a preferred (e.g., highest) characteristic evaluation result among the finally generated DOE set and provide the case to the second electronic device 120. When the termination condition of the genetic algorithm is not satisfied, the control circuit 210 may provide a control signal to the GA execution circuit 230 to instruct the GA execution circuit 230 to continue performing generation repetition based on the genetic algorithm. The control circuit 210 may provide the second electronic device 120 with the next generation DOE set generated from the GA execution circuit 230.

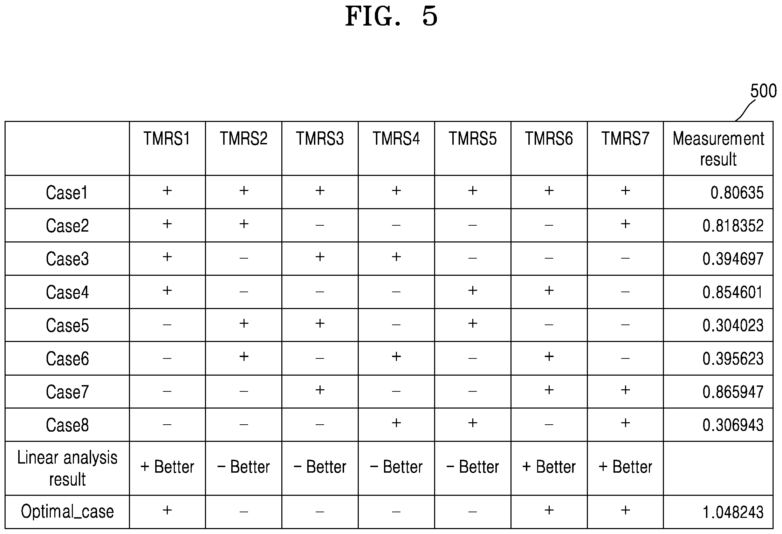

The PBD execution circuit 220 may generate an initial PBD DOE set based on the PBD. The PBD may refer to a design method that may examine factors in which various independent factors may influence results of an experiment. Based on the PBD, factors influencing memory characteristics (e.g., I/O margin, eye size in eye diagrams, or the like) may be explored while minimizing the number of experiments by selecting multiple factors to evenly divide the entire experimental space. The initial PBD DOE set may be used to search for an initial setting of the memory in the second electronic device 120. The second electronic device 120 may respond to the first electronic device 110 with a characteristic evaluation result based on the initial PBD DOE set, and the first electronic device 110 may determine a starting DOE set for starting a genetic algorithm based on the characteristic evaluation result corresponding to the initial PBD DOE set. An example of determining an optimal case is further described with reference to FIG. 5.

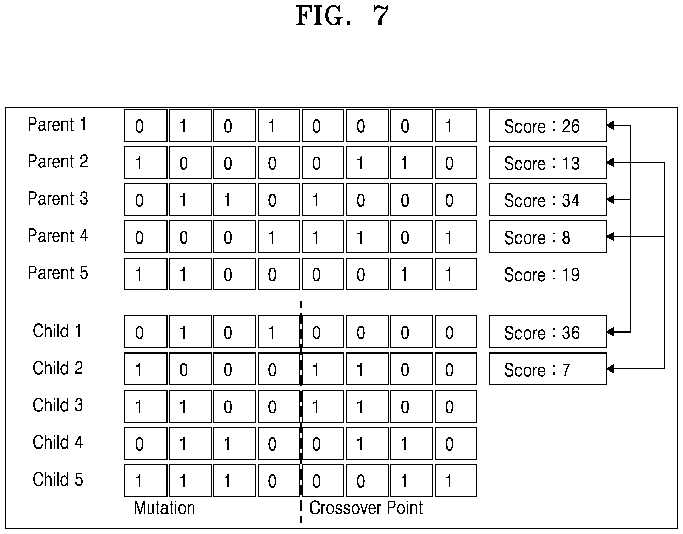

The GA execution circuit 230 may perform a genetic algorithm based on the DOE set. That is, the GA execution circuit 230 may use the DOE set already provided to the second electronic device 120 as a previous generation to generate a new DOE set of the next generation based on at least one of various selection operators (e.g., roulette wheel selection, ranking selection, tournament selection, elite preserving selection, or the like), various crossover operators (e.g., single point crossover, two point crossover, uniform crossover, arithmetic crossover, or the like), and/or various mutation operators (e.g., scramble mutation, inversion mutation, insertion mutation, or the like). An example of the generation repetition based on the genetic algorithm of the GA execution circuit 230 is described later with reference to FIG. 7.

FIG. 2B is a block diagram of a second electronic device 120, according to an embodiment.

Referring to FIG. 2B, the second electronic device 120 may include a processing circuit 215 and a memory device 225.

The processing circuit 215 may control the overall operation of the second electronic device 120. The processing circuit 215 may correspond to a central processing unit (CPU). For example, the processing circuit 215 may perform booting by loading a boot loader into a DRAM in response to a power-on of the second electronic device 120. As another example, the processing circuit 215 may change a setting value of the memory device 225.

According to an embodiment, the processing circuit 215 may obtain a characteristic evaluation result of the memory device 225 by receiving the DOE set from the first electronic device 110 and changing the setting value of the memory device 225 based on the DOE set. For example, when the DOE set includes eight (8) cases, the processing circuit 215 may change the setting value of the memory device 225 eight (8) times, and evaluate the semiconductor characteristics (e.g., I/O margin, eye size of an eye diagram, or the like) of the memory device 225 each time the setting value is changed. The processing circuit 215 may provide a characteristic evaluation result of the memory device 225 to the first electronic device 110.

The memory device 225 may include at least one of a non-volatile memory or a volatile memory. Examples of nonvolatile memory may include, but not be limited to, read-only memory (ROM), electrically erasable programmable ROM (EEPROM), NAND flash memory, vertical NAND (V-NAND or 3D NAND) flash memory, NOR flash memory, resistive random-access memory (RRAM or ReRAM), phase-change random-access memory (PRAM), magnetoresistive random-access memory (MRAM), ferroelectric random-access memory (FRAM), or the like. Examples of volatile memory may include, but not be limited to, random-access memory (RAM), static RAM (SRAM), DRAM, or the like.

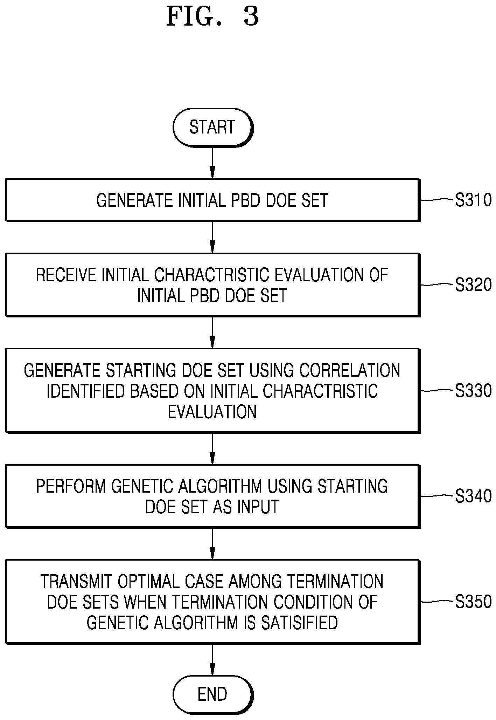

FIG. 3 is a flowchart illustrating a method of operating a first electronic device 110, according to an embodiment.

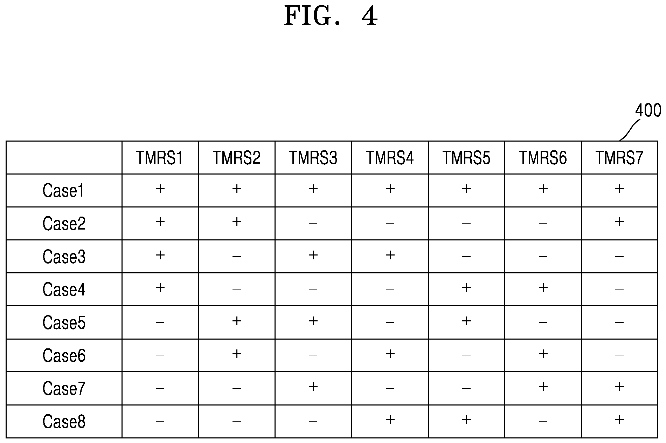

Referring to FIG. 3, in operation S310, the first electronic device 110 may generate an initial PBD DOE set. The initial PBD DOE set may be a set for identifying initial semiconductor characteristics of the memory device 225 in the second electronic device 120. For example, the initial PBD DOE set may correspond to a table 400 of FIG. 4.

Referring to FIG. 4 together, the table 400 illustrates eight (8) cases (e.g., a first case Case1, a second case Case2, a third case Case3, a fourth case Case4, a fifth case Case5, a sixth case Case6, a seventh case Case7, and an eighth case Case8) and seven (7) TMRS factors (e.g., a first TRMS factor TMRS1, a second TRMS factor TMRS2, a third TRMS factor TMRS3, a fourth TRMS factor TMRS4, a fifth TRMS factor TMRS5, a sixth TRMS factor TMRS6, and a seventh TRMS factor TMRS7). The first to seventh factors TMRS1 to TMRS7 may correspond to factors that may influence the semiconductor characteristics of the memory device 225. Each of the first to eighth cases Case1 to Case8 may be determined according to a combination of the first to seventh TMRS factors TMRS 1 to TMRS7. For example, as shown in table 400, the first case Case1 may evaluate semiconductor characteristics of the memory device 225 when the first to seventh TMRS factors TMRS1 to TMRS7 are set to ON (or POSITIVE). As another example, the second case Case2 may evaluate semiconductor characteristics of the memory device 225 when the first TMRS factor TMRS1, the second TMRS factor TMRS2, and the seventh TMRS factor TMRS7 are set to ON (or POSITIVE) and the remaining TMRS factors (e.g., the third TMRS factor TMRS3, the fourth TMRS factor TMRS4, the fifth TMRS factor TMRS5, and the sixth TMRS factor TMRS6) are set to OFF (or NEGATIVE).

As another example, the third case Case3 may evaluate semiconductor characteristics of the memory device 225 when the first TMRS factor TMRS1, the third TMRS factor TMRS3, and the fourth TMRS factor TMRS4 are set to ON (or POSITIVE) and the remaining TMRS factors (e.g., the second TMRS factor TMRS2, the fifth TMRS factor TMRS5, the sixth TMRS factor TMRS6, and the seventh TMRS factor TMRS7) are set to OFF (or NEGATIVE).

As another example, the fourth case Case4 may evaluate semiconductor characteristics of the memory device 225 when the first TMRS factor TMRS1, the fifth TRMS factor TMRS5, the sixth TRMS factor TMRS6, are set to ON (or POSITIVE) and the remaining TMRS factors (e.g., the second TRMS factor TMRS2, the third TRMS factor TMRS3, the fourth TRMS factor TMRS4, and the seventh TRMS factor TMRS7) are set to OFF (or NEGATIVE).

As another example, the fifth case Case5 may evaluate semiconductor characteristics of the memory device 225 when the second TRMS factor TMRS2, the third TRMS factor TMRS3, and the fifth TRMS factor TMRS5 are set to ON (or POSITIVE) and the remaining TMRS factors (e.g., the first TRMS factor TMRS1, the fourth TRMS factor TMRS4, the sixth TRMS factor TMRS6, and the seventh TRMS factor TMRS7) are set to OFF (or NEGATIVE).

As another example, the sixth case Case6 may evaluate semiconductor characteristics of the memory device 225 when the second TRMS factor TMRS2, the fourth TRMS factor TMRS4, and the sixth TRMS factor TMRS6 are set to ON (or POSITIVE) and the remaining TMRS factors (e.g., the first TRMS factor TMRS1, the third TRMS factor TMRS3, the fifth TRMS factor TMRS5, and the seventh TRMS factor TMRS7) are set to OFF (or NEGATIVE).

As another example, the seventh case Case7 may evaluate semiconductor characteristics of the memory device 225 when the third TRMS factor TMRS3, the sixth TRMS factor TMRS6, and the seventh TRMS factor TMRS7 are set to ON (or POSITIVE) and the remaining TMRS factors (e.g., the first TRMS factor TMRS1, the second TRMS factor TMRS2, the fourth TRMS factor TMRS4, and the fifth TRMS factor TMRS5) are set to OFF (or NEGATIVE).

As another example, the eighth case Case8 may evaluate semiconductor characteristics of the memory device 225 when the fourth TRMS factor TMRS4, the fifth TRMS factor TMRS5, and the seventh TRMS factor TMRS7 are set to ON (or POSITIVE) and the remaining TMRS factors (e.g., the first TRMS factor TMRS1, the second TRMS factor TMRS2, the third TRMS factor TMRS3, and the sixth TRMS factor TMRS6) are set to OFF (or NEGATIVE).

Although table 400 describes an example of an initial PBD DOE set with eight (8) cases and seven (7) TMRS factors, the present disclosure is not limited in this regard. For example, the initial PBD DOE set may include additional cases (e.g., more than eight (8)), may include less cases (e.g., less than eight (8)), may include additional TMRS factors (e.g., more than seven (7)), may include less TMRS factors (e.g., less than seven (7)), or any combination thereof. Alternatively or additionally, the initial PBD DOE set may include the same and/or different combinations of TMRS factors in the cases.

The first electronic device 110 may generate an initial PBD DOE set of the table 400 of FIG. 4 through the PBD execution circuit 220.

In operation S320, the first electronic device 110 may receive initial characteristic evaluation of the initial PBD DOE set. The second electronic device 120 may receive the initial PBD DOE set from the first electronic device 110 and perform semiconductor characteristic evaluation on the memory device 225. For example, the second electronic device 120 may perform semiconductor characteristic evaluation for each of the first to eighth cases Case1 to Case8 of the initial PBD DOE set. That is, the second electronic device 120 may measure the I/O margin and/or the eye size of the eye diagram by changing the setting of the memory device 225 according to the first to seventh TMRS factors TMRS 1 to TMRS7 mapped to the first case Case1, applying an input signal to the memory device 225 for which the setting change has been completed, and receiving an output signal. The second electronic device 120 may transmit, to the first electronic device 110, the characteristic evaluation result measured for the first case Case1. For the remaining second to eighth cases Case2 to Case8, the second electronic device 120 may repeatedly evaluate the semiconductor characteristics of the memory device 225 and transmit the measured characteristic evaluation results to the first electronic device 110. The results of the semiconductor characteristic evaluation of the memory device 225 set according to the initial PBD DOE set may correspond to the initial characteristic evaluation.

In operation S330, the first electronic device 110 may generate the starting DOE set using the correlation identified based on the initial characteristic evaluation. The starting DOE set may refer to a set provided as an input to the GA execution circuit 230. That is, the starting DOE set may correspond to the first generation DOE set (or the first parent DOE) in which the genetic algorithm starts.

In order to determine the starting DOE set, the first electronic device 110 may identify a correlation based on the initial characteristic evaluation. For example, referring to FIG. 5 together, a table 500 may be substantially similar to and/or the same as table 400 of FIG. 4 and may further include an additional row of the linear analysis result. The additional row may indicate a case newly added according to a linear analysis result, and may be referred to as an optimal case. The first electronic device 110 may use the characteristic evaluation result for each case of the initial PBD DOE to derive the optimal case. The first electronic device 110 may perform linear analysis by determining whether semiconductor characteristics are improved when each TMRS factor is ON (or POSITIVE) or whether semiconductor characteristics are further improved when each TMRS factor is OFF (or NEGATIVE). In an embodiment, the first electronic device 110 may determine whether results of summing the evaluation results when a specific TMRS factor is ON and subtracting the evaluation results when the specific TMRS factor is OFF are greater than 0. For example, in a case of performing a linear analysis on the first TMRS factor TMRS1, the evaluation results of the cases when the first TMRS factor TMRS1 is ON (e.g., the first to fourth cases Case1 to Case4) may be summed and the evaluation results of the cases when the first TMRS factor TMRS1 is OFF (e.g., the fifth to eighth Case5 to Case8) may be subtracted. In such an example, the result of the linear analysis may be approximately 1.001464, and thus, the linear analysis result for the first TMRS factor TMRS1 may be determined to be ON (or POSITIVE). The first electronic device 110 may repeat the same process for the second to seventh TMRS factors TMRS2 to TMRS7 to determine a combination of the TMRS factors of the optimal case.

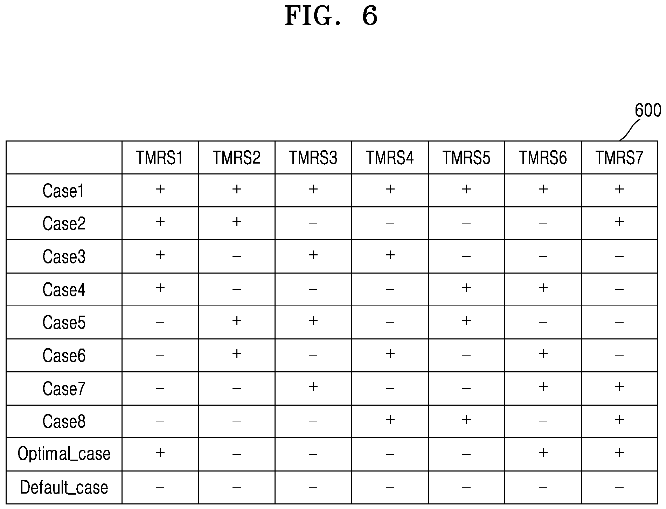

The first electronic device 110 may obtain a starting DOE set to be used as an input of a genetic algorithm by adding the optimal case and the basic case to the existing initial PBD DOE set. The basic case may refer to a case in which the first to seventh TMRS factors TMRS1 to TMRS7 are OFF (or NEGATIVE). The adding of the basic case to the generating of the starting DOE may increase the likelihood of reaching a global optima without falling into the local optima in performing the genetic algorithm. Referring to FIG. 6 together, a table 600 may correspond to a starting DOE set. That is, the table 600 may include both an optimal case determined according to a linear analysis result and a basic (or default) case in which the first to seventh TMRS factors TMRS1 to TMRS7 are OFF in the initial cases generated by the PBD execution circuit 220.

In operation S340, the first electronic device 110 may perform a genetic algorithm using a starting DOE set as an input. For example, the first electronic device 110 may provide the generated starting DOE set as an input to the GA execution circuit 230. The GA execution circuit 230 may generate a next generation DOE set by performing a genetic algorithm using the starting DOE set as the previous generation.

Referring to FIG. 7 together, the first electronic device 110 may perform a genetic algorithm based on the starting DOE set. For convenience of description, the starting DOE set of FIG. 7 is illustrated as including five (5) parent cases (e.g., a first parent case Parent1, a second parent case Parent2, a third parent case Parent3, a fourth parent case Parent4, and a fifth parent case Parent5). However, the present disclosure not limited thereto. The first electronic device 110 may evaluate a score for each case included in the starting DOE set before performing the genetic algorithm. The score may employ the characteristic evaluation result described above, or may be obtained according to an equation for converting the characteristic evaluation result in proportion to the characteristic evaluation result, and is not limited to a specific embodiment. For example, as a result of evaluating the score of the starting DOE set, the score of the first parent case Parent1 may be 26, the score of the second parent case Parent2 may be 13, the score of the third parent case Parent3 may be 34, the score of the fourth parent case Parent4 may be 8, and the score of the fifth parent case Parent5 may be 19. The first electronic device 110 may generate the next generation DOE set based on various selection operators, crossover operators, and mutation operators. The next generation DOE set may include five (5) child cases (e.g., a first child case Child1, a second child case Child2, a third child case Child3, a fourth child case Child4, and a fifth child case Child5).

According to an embodiment, the first electronic device 110 may cross over cases having high scores in the starting DOE set. The first electronic device 110 may cross over the TMRS factors of the first parent case Parent1 and the third parent case Parent3 in the starting DOE set. In the case of FIG. 7, only one crossover point may be set as an intermediate point, however, the present disclosure is not limited thereto. Referring to FIG. 7, the first child case Child1 may be obtained by crossing over to include a first-half four TMRS factors TMRS1 to TMRS4 of the first parent case Parent1 and a second-half four TMRS factors TMRS5 to TMRS8 of the third parent case Parent3.

According to an embodiment, the first electronic device 110 may cross over cases having low scores in the starting DOE set. The first electronic device 110 may cross over the TMRS factors of the second parent case Parent2 and the fourth parent case Parent4 in the starting DOE set. Referring to FIG. 7, the second child case Child2 may be obtained by crossing over to include the first-half four TMRS factors TMRS1 to TMRS4 of the second parent case Parent2 and the second-half four TMRS factors TMRS5 to TMRS8 of the fourth parent case Parent4.

According to an embodiment, the first electronic device 110 may cross over adjacent cases in the starting DOE set. Referring to FIG. 7, the third child case Child3 may be obtained by crossing over to include the first-half four TMRS factors TMRS1 to TMRS4 of the fifth parent case Parent5 and the second-half four TMRS factors TMRS5 to TMRS8 of the fourth parent case Parent4. The fourth child case Child4 may be obtained by crossing over to include the first-half four TMRS factors TMRS1 to TMRS4 of the third parent case Parent3 and the second-half four TMRS factors TMRS5 to TMRS8 of the second parent case Parent2.

According to an embodiment, the first electronic device 110 may cross over and mutate any cases in the starting DOE set. Referring to FIG. 7, the fifth child case Child5 may be obtained by crossing over to include the first-half four TMRS factors TMRS1 to TMRS4 of the fifth parent case Parent5 and the second-half four TMRS factors TMRS5 to TMRS8 of the first parent case Parent1 and then changing OFF to ON by generating a mutation in the third TMRS factor TMRS3.

However, the embodiment in which the first electronic device 110 performs a genetic algorithm is not limited thereto, and a new DOE set of the next generation may be generated based on at least one of various selection operators (e.g., roulette wheel selection, ranking selection, tournament selection, elite preserving selection, or the like), various crossover operators (e.g., single point crossover, two point crossover, uniform crossover, arithmetic crossover, or the like), and various mutation operators (e.g., scramble mutation, inversion mutation, insertion mutation, or the like). The first electronic device 110 may transmit the new DOE set of the next generation to the second electronic device 120 to evaluate semiconductor characteristics, and obtain a characteristic evaluation result for the new DOE set of the next generation. When the characteristic evaluation result for the new DOE set of the next generation does not satisfy the termination condition of the genetic algorithm, it may be repeated to generate the new DOE set of the next generation by performing the genetic algorithm for generation repetition again.

In operation S350, when the termination condition of the genetic algorithm is satisfied, the first electronic device 110 may transmit an optimal case among the termination DOE sets. The first electronic device 110 may transmit the new DOE set of the next generation to the second electronic device 120 to evaluate semiconductor characteristics, and obtain a characteristic evaluation result for the new DOE set of the next generation. When the characteristic evaluation result for the new DOE set of the next generation satisfies the termination condition of the genetic algorithm, the genetic algorithm for generation repetition may be terminated without further performing the genetic algorithm. The termination condition may be based on, for example, whether a case exceeding a threshold score exists, or whether a characteristic evaluation result exceeding a threshold exists. However, the above termination condition is not limited thereto, and it may be determined that the termination condition is satisfied if the generation repetition is performed in excess of the threshold number of times even if the above-described threshold score or termination condition exceeding the threshold value is not achieved to prevent excessive delay in a booting process.

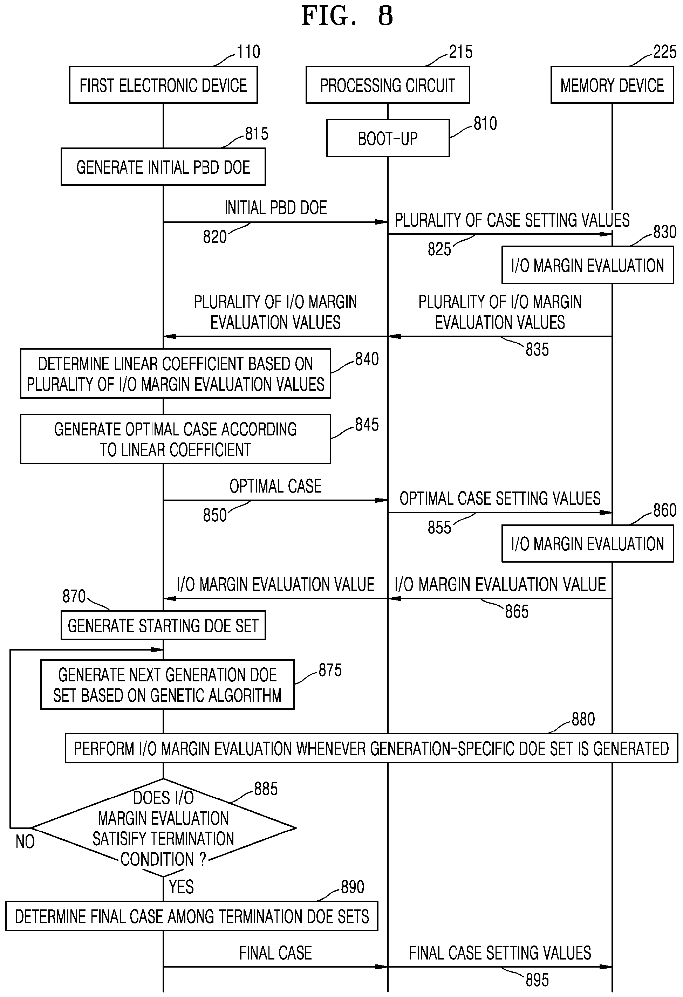

FIG. 8 illustrates a signal exchange diagram, according to an embodiment.

Hereinafter, for convenience of description, description is made based on a case in which the memory device 225 is a DRAM. However, as described above, the memory device 225 is not limited to DRAM and may be various volatile memories or nonvolatile memories including NAND flash memories.

Referring to FIG. 8, in operation 810, the processing circuit 215 may perform boot-up. That is, a booting process may be performed by loading a boot loader into the DRAM in response to power-on of the second electronic device 120.

In operation 815, the first electronic device 110 may generate an initial PBD DOE. The PBD execution circuit 220 may generate the DOE based on TMRS factors (e.g., 31 TMRS factors) influencing upon the performance evaluation of the DRAM. For example, the initial PBD DOE may include 32 cases. Referring to FIG. 8, it is illustrated that operation 810 precedes operation 815, but embodiments are not limited thereto. Operations 810 and 815 may be performed in parallel, and/or operation 815 may be performed first.

In operation 820, the first electronic device 110 may provide the initial PBD DOE to the second electronic device 120 of FIG. 1. For example, the first electronic device 110 may provide the processing circuit 215 of the second electronic device 120 with 32 cases included in the initial PBD DOE. Each of the 32 cases may correspond to a combination of 31 different TMRS factors.

In operation 825, the processing circuit 215 may provide the memory device 225 with a plurality of case setting values. The processing circuit 215 may sequentially change the setting value of the memory device 225 according to the combination of TMRS factors of the 32 cases, and evaluate the I/O margin value of the case set in operation 830. For example, the processing circuit 215 may evaluate the I/O margin by setting the memory device 225 according to the TMRS factor combination of the first case of the 32 cases provided from the first electronic device 110 and applying an input signal to the memory device 225. Thereafter, the processing circuit 215 may sequentially evaluate the individual characteristics up to the I/O margin according to the TMRS factor combination of the 32nd case.

In operation 835, the first electronic device 110 may receive a plurality of I/O margin evaluation values. Although FIG. 8 shows that the memory device 225 provides the plurality of I/O margin evaluation values to the processing circuit 215 at a time, and the processing circuit 215 transmits the plurality of I/O margin evaluation values to the first electronic device 110, embodiments are not limited thereto. As described above, the memory device 225 may output an I/O margin evaluation value for each case, and the processing circuit 215 may transmit the I/O margin evaluation value to the first electronic device 110 whenever the characteristic evaluation of each case is completed. At the time point of operation 835, the first electronic device 110 may obtain 32 I/O margin evaluation values corresponding to 32 cases.

In operation 840, the first electronic device 110 may determine a linear coefficient based on the plurality of I/O margin evaluation values. For example, the first electronic device 110 may determine whether the I/O margin evaluation value improves when the first TMRS factor from among 31 TMRS factors is ON or OFF. For example, the first electronic device 110 may determine the linear coefficient to be either ON, OFF, or NULL (e.g., may indicate that there is no correlation) by summing the evaluation values of 32 cases corresponding to the first TMRS factor. The first electronic device 110 may determine 31 linear coefficients by performing the same process on each of the 31 TMRS factors.

In operation 845, the first electronic device 110 may generate an optimal case according to a linear coefficient. The optimal case may refer to a case in which each of the 31 TMRS factors is set to match the linear coefficient determined in operation 840.

In operation 850, the first electronic device 110 may provide information on the optimal case to the second electronic device 120. For example, the first electronic device 110 may provide the processing circuit 215 with an optimal case in which each of the 31 TMRS factors is set to match a linear coefficient.

In operation 855, the processing circuit 215 may provide optimal case setting values to the memory device 225. The processing circuit 215 may change the setting value of the memory device 225 according to a combination of 31 TMRS factors indicated by the optimal case, and may evaluate an I/O margin value of the memory device 225 in operation 860. For example, the processing circuit 215 may set the memory device 225 according to the TMRS factor combination of the optimal case provided from the first electronic device 110 and apply an input signal to the memory device 225 to evaluate the I/O margin.

In operation 865, the first electronic device 110 may receive an I/O margin evaluation value. The received I/O margin evaluation value may be an I/O margin evaluation value corresponding to the optimal case generated in operation 845.

In operation 870, the first electronic device 110 may generate a starting DOE set. The first electronic device 110 may generate a starting DOE set by additionally merging the optimal case and the basic case with the initial PBD DOE. The basic case may correspond to a case in which all TMRS factors are OFF. Accordingly, the starting DOE set may include 34 cases. However, the above-described embodiments are not limited thereto, and a starting DOE set may be generated by additionally merging cases in which all TRMS factors are ON.

In operation 875, the first electronic device 110 may generate the next generation DOE set based on the genetic algorithm. The first electronic device 110 may randomly select at least two cases from among the 34 parent cases, and generate a single child case based on various selection operators, crossover operators, and mutation operators for the selected cases. The first electronic device 110 may generate a next generation DOE set according to the genetic algorithm by randomly generating 34 child cases.

In operation 880, the first electronic device 110 may perform I/O margin evaluation whenever generating a generation-specific DOE set. For example, when the next generation DOE set was generated based on the starting DOE set in operation 875, the second generation DOE set may have been generated. The first electronic device 110 may obtain an I/O margin evaluation value for each case by providing 34 cases of the second generation DOE set to the second electronic device 120.

In operation 885, the first electronic device 110 may determine whether the I/O margin evaluation satisfies a termination condition. For example, in operation 880, the first electronic device 110 may have obtained I/O margin evaluation values for the second generation DOE set. The first electronic device 110 may determine whether the termination condition of the genetic algorithm is satisfied based on the I/O margin evaluation values for the second generation DOE set. For example, the first electronic device 110 may determine whether there is a case exceeding a threshold value among the 34 I/O margin evaluation values corresponding to the 34 cases of the second generation DOE set. When there is a case exceeding the threshold value among 34 I/O margin evaluation values for the second generation DOE set, the first electronic device 110 may determine that the termination condition is satisfied and proceed to operation 890. If no case exceeds the threshold value from among the 34 I/O margin evaluation values corresponding to the 34 cases of the second generation DOE set, it may be determined that the termination condition is not satisfied and may return to operation 875. In such a case, the first electronic device 110 may generate the third generation DOE set by re-performing the genetic algorithm for the input of the second generation DOE set. In operation 880, the first electronic device 110 may provide the third generation DOE set to the second electronic device 120 of FIG. 1 to perform characteristic evaluation, and obtain 34 I/O margin evaluation values corresponding to 34 cases of the third generation DOE set. The first electronic device 110 may determine whether the 34 I/O margin evaluation values corresponding to the 34 cases of the third generation DOE set satisfy the termination condition, and perform generation repetition until the termination condition is satisfied by returning to operation 875 according to the determination result.

In operation 890, the first electronic device 110 may determine a final case of a termination DOE set. The termination DOE set may refer to as a DOE set of a generation that satisfies the termination condition of the genetic algorithm. The first electronic device 110 may determine, as a final case, a case having the highest score or a case having the highest I/O evaluation margin value among 34 cases included in the termination DOE set.

In operation 895, the first electronic device 110 may provide the second electronic device 120 of FIG. 1 with the final case. For example, the first electronic device 110 may provide the final case to the processing circuit 215. The processing circuit 215 may change the setting value of the memory device 225 according to the 34 TMRS factors included in the final case. The memory device 225 may provide an improved I/O margin or semiconductor characteristic by changing the setting to TMRS factor values according to the final case prior to completion of the boot process of the processing circuit 215.

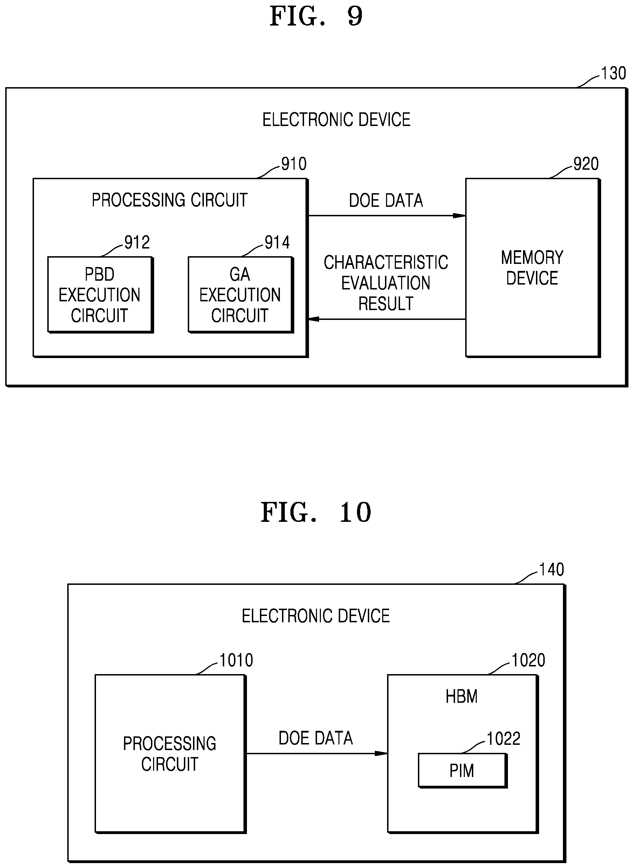

FIG. 9 is a block diagram illustrating an electronic device 130, according to an embodiment.

Referring to FIG. 9, the electronic device 130 may include a processing circuit 910 and a memory device 920. Redundant descriptions with those of the embodiments given with reference to FIGS. 1 to 8 may be omitted.

The processing circuit 910 may include a PBD execution circuit 912 and a GA execution circuit 914. That is, the electronic device 130 of FIG. 9 may not need to include a separate electronic device (e.g., the first electronic device 110 of FIG. 1) to improve the characteristics of the memory device included in the electronic device 130. For example, the PBD execution circuit 912 may generate an initial PBD DOE set. The initial PBD DOE set may be a DOE set for identifying initial characteristics of the memory device 920. The GA execution circuit 914 may generate the next generation DOE set from the previous generation DOE set based on the genetic algorithm.

In an embodiment, the processing circuit 910 may not include the PBD execution circuit 912. In such an embodiment, instead of generating an initial PBD DOE set by the PBD execution circuit 912, the electronic device 130 may pre-store the initial PBD DOE set in a ROM area accessible at boot time, and load the initial PBD DOE set to identify the initial characteristics of the memory device 920.

FIG. 10 is a block diagram illustrating an electronic device 140, according to an embodiment.

Referring to FIG. 10, the electronic device 130 may include a processing circuit 1010 and a high bandwidth memory (HBM) 1020. Redundant descriptions with those of the embodiments given with reference to FIGS. 1 to 9 may be omitted.

The HBM 1020 may include a plurality of stacked memory dies, and through a plurality of channels, data may be written in parallel to the plurality of memory dies and/or data may be read in parallel from the plurality of memory dies. The HBM 1020 may include a process in memory (PIM) circuit 1022. The PIM circuit 1022 may perform arithmetic processing by a kernel loaded by the CPU of the processing circuit 215. For example, the PIM circuit 1022 may generate an initial PBD DOE set based on the PBD. The PIM circuit 1022 may include an internal block and/or circuit capable of performing a genetic algorithm that performs generation repetition by stochastically changing each element. For example, the PIM circuit 1022 may perform a genetic algorithm based on a DOE set. The PIM circuit 1022 may generate a new DOE set of the next generation using the initial PBD DOE set as the previous generation.

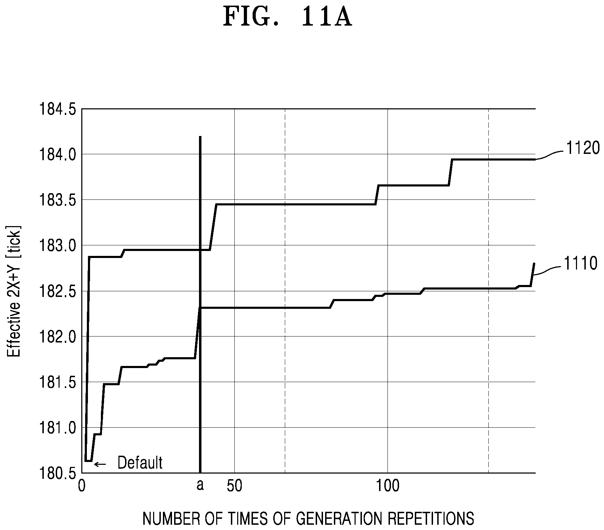

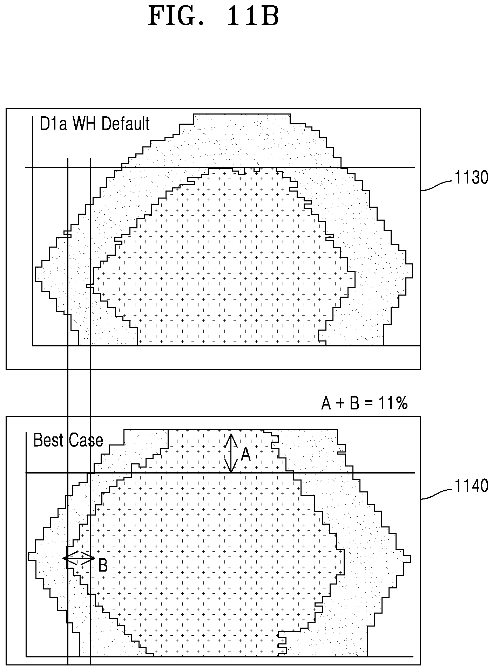

FIG. 11A is a graph illustrating improvement of semiconductor characteristics according to generation repetition, according to an embodiment. FIG. 11B illustrates an improved eye diagram, according to an embodiment.

Referring to FIG. 11A, a first graph 1110 represents a degree of improvement of semiconductor characteristics when only a genetic algorithm is used according to a comparative example, and a second graph 1120 represents a degree of improvement of semiconductor characteristics when both a PBD and a genetic algorithm are based according to an embodiment.

According to an embodiment, the default may represent an I/O margin evaluation value when all TMRS factors influencing upon the I/O margin of the memory device are OFF. As shown in the first graph 1110, the I/O margin evaluation value may increase as generations are repeated using a genetic algorithm between TMRS factors influencing upon the I/O margin of the memory device. However, in the case of the first graph 1110, the TMRS factors were not selected so that the entire experimental space was evenly divided because all TMRS factors were OFF in the basic case, which is the input of the genetic algorithm. For example, after repeating the generation repetition "a" times, according to the genetic algorithm, the I/O margin evaluation value may not be significantly improved. That is, the input of the genetic algorithm may not evenly divide the entire experimental space and, accordingly, may have reached a local optima.

According to the second graph 1120, the I/O margin evaluation value may increase as generations are repeated using a genetic algorithm between TMRS factors influencing the I/O margin of the memory device. However, compared with the first graph 1110, it is possible to observe a relatively rapid increase in the I/O margin evaluation value from the initial time point of generation repetition. The rapid increase may be a result of performing linear analysis based on the initial PBD DOE, according to FIG. 3, which includes the optimal case. In addition, unlike the first graph 1110, it may also be possible to observe that the second graph 1120 may continue to improve the I/O evaluation margin even after having repeated the generation repetition the "a" number of time. That is, the global optima may be achieved since TMRS factors have been selected so that the entire experimental space is equally divided on the basis of a PBD without applying an input of a genetic algorithm to a basic case.

Referring to FIG. 11B, the first diagram 1130 may correspond to an eye diagram when all TMRS factors influencing upon the I/O margin of the memory device are OFF. The second diagram 1140 may correspond to an eye diagram when the setting of the memory device is changed according to TMRS factors of the final case satisfying the termination condition using a PBD and a GA according to an embodiment. As shown in FIG. 11B, in the case of the second diagram 1140, compared to the first diagram 1130, the size of the noise margin may also be improved, and the left and right widths of the eye may be increased, indicating that the overall eye size is improved.

## Claims

1. An electronic device (110), comprising:
a Plackett-Burman design, PBD, execution circuit (220) configured to generate an initial design of experiment ,DOE, set comprising a plurality of initial cases regarding semiconductor characteristics of a memory device (225) comprised by an external device (120);
a genetic algorithm ,GA, execution circuit (230) configured to convert a previous generation DOE set to a next generation DOE set based on a genetic algorithm; and
a control circuit (210) configured to:
transmit (820) the initial DOE set to the external device (120);
receive (835), from the external device (120), an initial characteristic evaluation performed based on the initial DOE set;
generate (870) a starting DOE set based on the initial characteristic evaluation; and
control (875) the genetic algorithm to be performed with an experimental result of the starting DOE set as an input,
wherein each of the plurality of initial cases corresponds to a combination of a plurality of setting values influencing the semiconductor characteristics.

2. The electronic device (110) of claim 1, wherein the PBD execution circuit (220) is further configured to generate the plurality of initial cases by combining the plurality of setting values to evenly divide an experimental space, and
wherein the initial characteristic evaluation corresponds to a result of setting the memory device (225) based on the setting value of each of the plurality of initial cases and evaluating the semiconductor characteristics.

3. The electronic device (110) of claim 1 or 2, wherein the GA execution circuit (230) is further configured to:
generate a plurality of child cases to be included in the next generation DOE set by selecting at least two of a plurality of parent cases included in the previous generation DOE set based on at least one of a plurality of selection operators, a plurality of crossover operators, or a plurality of mutation operators.

4. The electronic device (110) of claim 3, wherein the plurality of selection operators comprises at least one of a roulette wheel selection method, a ranking selection method, a tournament selection method, an elite conservation selection method,
wherein the plurality of crossover operators comprises at least one of a single point crossover, a two point crossover, a uniform crossover, or an arithmetic crossover, and
wherein the plurality of mutation operators comprises at least one of a scramble mutation, an inversion mutation, or an insertion mutation.

5. The electronic device (110) of any one of claims 1 to 4, wherein the control circuit (210) is further configured to:
perform (840) linear analysis for each of the plurality of setting values based on the initial characteristic evaluation;
determine (840) the plurality of setting values based on a result of the linear analysis;
generate (845) an optimal case comprising the plurality of determined setting values; and
generate (870) the starting DOE set by merging the plurality of initial cases, the optimal case, and a basic case, and
wherein the basic case corresponds to a case in which all of the plurality of setting values are set to off.

6. The electronic device (110) of any one of claims 1 to 5, wherein the control circuit (210) is further configured to:
transmit, to the external device (120), the next generation DOE set outputted by the GA execution circuit (230);
receive, from the external device (120), a characteristic evaluation result corresponding to the next generation DOE set; and
determine whether the characteristic evaluation result satisfies a termination condition of the genetic algorithm.

7. The electronic device (110) of claim 6, wherein the control circuit (210) is further configured to:
based on the characteristic evaluation result exceeding a threshold evaluation value, determine (885) satisfaction of the termination condition;
determine (890), as a final case, a case having a highest evaluation value from among a plurality of child cases included in the next generation DOE set; and
transmit (890), to the external device (120), the final case.

8. The electronic device (110) of claim 6 or 7, wherein the control circuit (210) is further configured to:
based on the characteristic evaluation result being less than a threshold evaluation value, determine repetition of the genetic algorithm; and
provide the next generation DOE set to the GA execution circuit (230).

9. An operating method of an electronic device (110), the operating method comprising:
generating (815) an initial design of experiment, DOE, set comprising a plurality of initial cases regarding semiconductor characteristics of a memory device (225) of an external device (120);
transmitting (820), to the external device (120), the initial DOE set;
receiving (835), from the external device (120), an initial characteristic evaluation performed based on the initial DOE set;
generating (870) a starting DOE set based on the initial characteristic evaluation; and
generating (875) an output DOE set by performing a genetic algorithm with an experimental result of the starting DOE set as an input,
wherein each of the plurality of initial cases corresponds to a combination of a plurality of setting values influencing the semiconductor characteristics.

10. The operating method of claim 9, further comprising generating the plurality of initial cases by combining the plurality of setting values to evenly divide an experimental space based on a Plackett-Burman design, PBD, and
wherein the initial characteristic evaluation corresponds to a result of setting the memory device (225) based on the setting value of each of the plurality of initial cases and evaluating the semiconductor characteristics.

11. The operating method of claim 9 or 10, wherein the performing of the genetic algorithm comprises:
generating a plurality of child cases to be included in a next generation DOE set by selecting at least two of a plurality of parent cases included in the starting DOE set based on at least one of a plurality of selection operators, a plurality of crossover operators, or a plurality of mutation operators.

12. The operating method of claim 11, wherein the plurality of selection operators comprises at least one of a roulette wheel selection method, a ranking selection method, a tournament selection method, or an elite conservation selection method,
wherein the plurality of crossover operators comprises at least one of a single point crossover, a two point crossover, a uniform crossover, or an arithmetic crossover, and
wherein the plurality of mutation operators comprises at least one of a scramble mutation, an inversion mutation, or an insertion mutation.

13. The operating method of any one of claims 9 to 12, further comprising:
performing (840) linear analysis for each of the plurality of setting values based on the initial characteristic evaluation;
determining (840) the plurality of setting values based on a result of the linear analysis;
generating (845) an optimal case comprising the plurality of determined setting values; and
generating (870) the starting DOE set by merging the plurality of initial cases, the optimal case, and a basic case,
wherein the basic case corresponds to a case in which all of the plurality of setting values are set to off.

14. The operating method of any one of claims 9 to 13, further comprising:
transmitting, to the external device (120), a next generation DOE set;
receiving, from the external device (120), a characteristic evaluation result corresponding to the next generation DOE set; and
determining whether the characteristic evaluation result satisfies a termination condition of the genetic algorithm.

15. The operating method of claim 14, further comprising:
when the characteristic evaluation result exceeds a threshold evaluation value:
determining (875) satisfaction of the termination condition,
determining (890), as a final case, a case with a highest evaluation value from among a plurality of child cases comprised by the next generation DOE set, and
transmitting (895), to the external device (120), the final case, when the characteristic evaluation result is less than a threshold evaluation value:
determining (885) dissatisfaction of the termination condition, and
repeating the genetic algorithm based on the next generation DOE set.
